# EUROPEAN PATENT APPLICATION

(11) **EP 4 723 341 A1**
(43) Date of publication of application: **08.04.2026**
(21) Application number: 24852419.1
(22) Date of filing: 09.08.2024
(51) Int. Cl.: H01M 50/30, H01M 50/141, H01M 50/105, H01M 50/186

(54) **POUCH CELL**

(30) Priority: 10.08.2023 KR 20230105070
(71) Applicant: LG Energy Solution, Ltd., Seoul 07335 (KR)
(72) Inventor: LEE, Yu Jin, Daejeon 34122 (KR); HWANG, Ji Young, Daejeon 34122 (KR); PARK, Eun Suk, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Goddar, Heinz J.
(86) International application number: PCT/KR2024/011934
(87) International publication number: WO 2025/034066

(57) **Abstract**

The present disclosure relates to a pouch cell for preventing or reducing the ingress of external moisture into a pouch through an area where gas inside the pouch is released to the atmosphere. The pouch cell according to the present disclosure includes an electrode assembly including a positive electrode, a negative electrode and a separator, a pouch accommodating the electrode assembly and having a hole, and a gas release film attached to the pouch to cover the hole and configured to allow gas to pass through, wherein the pouch includes a gas release portion having the hole and an outer packaging portion connected to the gas release portion, and wherein the gas release portion and the outer packaging portion have a stepped shape with each other.

## Description

### TECHNICAL FIELD

### CROSS-REFERENCE TO RELATED APPLICATIONS

The present application claims priority to Korean Patent Application No. 10-2023-0105070 filed on August 10, 2023 in the Republic of Korea, the disclosure of which is incorporated herein by reference.

### TECHNICAL FIELD

The present disclosure relates to a pouch cell, and more particularly, to a secondary battery pouch cell that can be charged and discharged.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Batteries that store electrical energy may be generally classified into primary batteries and secondary batteries. The primary batteries are single-use or disposable batteries, while the secondary batteries are rechargeable batteries manufactured using materials that can allow repeated oxidation and reduction between electric currents and the materials. That is, when reduction reaction takes place in the material by the electric current, charge is performed, and when oxidation reaction takes place in the material, discharge is performed, and as charge-discharge are repeatedly performed, electricity is produced.

Secondary batteries may be classified into cylindrical cells, pouch cells, prismatic cells, etc. according to the shape. Among them, a pouch cell may be manufactured by receiving a stack-type electrode assembly including a positive electrode, a negative electrode and a separator in a pouch, and sealing the sides of the pouch.

On the other hand, an electrolyte solution may be received in the pouch of the pouch cell together with the electrode assembly. In this instance, inside the pouch of the pouch cell, the remaining moisture of the electrolyte solution or moisture coming in from the outside reacts with a lithium salt to produce hydrogen fluoride (HF), and the decomposition of the electrolyte solution may produce gas such as carbon dioxide, carbon monoxide, ethylene and methane. Additionally, hydrogen and HF may be additionally produced according to the material of the positive electrode included in the electrode assembly of the pouch cell, causing overheating due to overcharge and an internal short circuit during charging and discharging. As a consequence, a large amount of gas may be produced in the pouch. The gas may increase the internal pressure of the pouch, and swelling or venting may occur in the pouch by the increased pressure. Accordingly, the pouch cell may include a structure for releasing gas inside the pouch to the atmosphere to prevent venting.

The pouch cell including the conventional gas release structure has a problem with ingress of external moisture into the pouch through the gas release structure, and an additional problem with performance degradation of the pouch cell due to the moisture ingress.

Accordingly, there is a need for a pouch cell capable of preventing or reducing the ingress of external moisture into a pouch through an area where gas inside the pouch is released to the atmosphere.

### SUMMARY

### TECHNICAL PROBLEM

The present disclosure is directed to providing a pouch cell capable of preventing or reducing the ingress of external moisture into a pouch through an area where gas inside the pouch is released to the atmosphere.

### TECHNICAL SOLUTION

A pouch cell according to the present disclosure may include an electrode assembly including a positive electrode, a negative electrode and a separator, a pouch accommodating the electrode assembly and having a hole, and a gas release film attached to the pouch to cover the hole and configured to allow gas to pass through, wherein the pouch may include a gas release portion having the hole, and an outer packaging portion connected to the gas release portion, and wherein the gas release portion and the outer packaging portion may have a stepped shape with each other.

The gas release portion may have the stepped shape in a direction facing away from the electrode assembly.

The gas release film may be disposed between the pouch and the electrode assembly.

The gas release film may include a first film portion attached to the gas release portion to cover the hole, and a second film portion attached to the outer packaging portion, and having a stepped shape with the first film portion.

The gas release film may include the first film portion and the second film portion having a same thickness.

The gas release film may have a larger thickness from the gas release portion to a surface than a thickness from the outer packaging portion to the surface.

The gas release portion may have the stepped shape in a direction toward the electrode assembly.

The gas release film may be coupled to a surface of the gas release portion and a surface of a part of the outer packaging portion.

The pouch may have a higher surface roughness on a surface facing the gas release film than a surface roughness on a surface that does not face the gas release film.

The pouch may be treated with a plasma or a primer to make a surface roughness on a surface facing the gas release film higher than a surface roughness on a surface that does not face the gas release film.

The pouch may have a surface roughness (R) of 20 nm or more and 140 nm or less on a surface facing the gas release film.

The pouch may further include a sealing portion sealed by sealing, and the gas release portion may be disposed at a distance from the sealing portion.

### ADVANTAGEOUS EFFECTS

The pouch cell according to the present disclosure may include the electrode assembly including the positive electrode, the negative electrode and the separator, the pouch accommodating the electrode assembly and having the hole, and the gas release film attached to the pouch to cover the hole, and configured to allow gas to pass through, wherein the pouch may include the gas release portion having the hole, and the outer packaging portion connected to the gas release portion, and the gas release portion and the outer packaging portion may have a stepped shape with each other.

Accordingly, it may be possible to release gas inside the pouch to the atmosphere and at the same time, to prevent the ingress of external moisture into the pouch.

Through this, it may be possible to prevent degradation of the function of the pouch cell.

Additionally, it may be possible to delay or prevent venting of the pouch by gas inside the pouch, thereby improving safety of the pouch cell.

The effects according to the present disclosure are not limited by the above-described effects, and more diverse effects are included in the specification.

### BRIEF DESCRIPTION OF THE DRAWINGS

FIG. 1 is a schematic perspective view of a pouch cell according to embodiment 1 of the present disclosure.
FIG. 2 is a schematic cross-sectional view of FIG. 1, taken along the line A-A'.
FIG. 3 is a schematic enlarged view of section B in FIG. 2.
FIG. 4 is a schematic enlarged view of a gas release film of a pouch cell according to embodiment 2 of the present disclosure and its proximity.
FIG. 5 is a schematic enlarged view of a gas release film of a pouch cell according to embodiment 3 of the present disclosure and its proximity.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### Embodiment 1

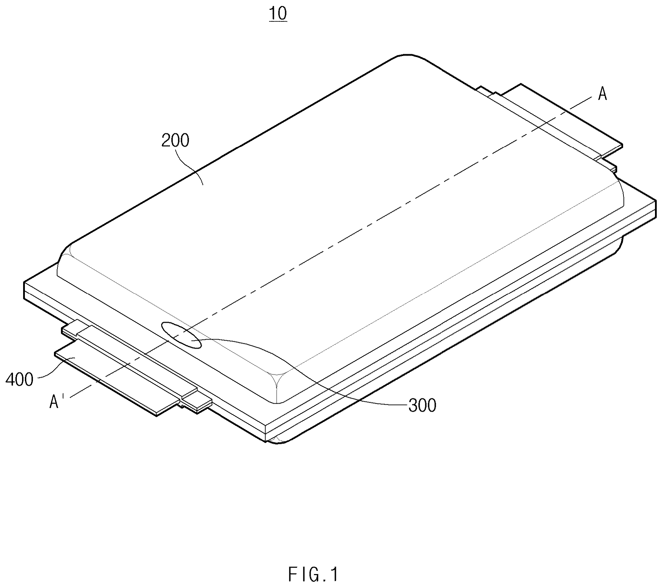

FIG. 1 is a schematic perspective view of a pouch cell 10 according to embodiment 1 of the present disclosure.

The pouch cell 10 according to embodiment 1 of the present disclosure may include an electrode assembly 100, a pouch 200 and a gas release film 300.

The pouch cell 10 according to the present disclosure may refer to a pouch-type secondary battery among various types of secondary batteries that can be charged and discharged. The pouch cell 10 may have a shape in which the electrode assembly 100 is received in the pouch 200.

The electrode assembly 100 may include a positive electrode, a negative electrode and a separator. Here, the separator may be disposed between the positive electrode and the negative electrode to physically separate the positive electrode from the negative electrode. The electrode assembly 100 includes a stack-type in which the positive electrode, the negative electrode and the separator are stacked, or a jellyroll-type in which the positive electrode, the negative electrode and the separator are wound.

The electrode assembly 100 may be received in the pouch 200. The pouch 200 may include an inner layer, a metal layer and an outer layer, and the inner layer may have sealability by heat and pressure. After the electrode assembly 100 is received in the pouch 200, the inner layer may be sealed by heat and pressure. The metal layer may primarily include Al and STS. Additionally, the outer layer may have an insulating property.

The inner layer that may seal the pouch 200 through sealing may be made of at least one material selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber. In particular, polyolefin-based resin such as polypropylene (PP) or polyethylene (PE) may be primarily used.

The pouch cell 10 may include an electrode lead 400. The electrode lead 400 may be disposed such that it is electrically connected to the electrode assembly 100 and protruded outward from the pouch 200. The pouch cell 10 may provide electrical energy to the outside by the electrode lead 400 protruded outward from the pouch 200. Accordingly, the electrode lead 400 may be a conductor.

A lead film may cover the electrode lead 400 to isolate the pouch 200 from the electrode lead 400. Specifically, the lead film may be disposed on two surfaces of the electrode lead 400 to cover the electrode lead 400. The lead film may include a pair of lead films and each lead film may be disposed on each of the two surfaces of the electrode lead 400.

The pouch 200 may further include a sealing portion 230. The sealing portion 230 may refer to a sealed part by heat and pressure. Specifically, the sealing portion 230 may include the protruding part of the electrode lead 400. A part of the electrode lead 400 protruded from the sealing portion 230 may be sealed with the lead film. Additionally, a part of the electrode lead 400 that is not protruded from the sealing portion 230 may be sealed at the opposing sides of the pouch 200.

Meanwhile, when gas is produced in the pouch cell 10 during repeated charging and discharging, the internal pressure of the pouch 200 may increase. When the internal pressure of the pouch 200 is too high, venting may occur and the pouch cell 10 may lose the function.

Specifically, an electrolyte solution may be received in the pouch 200 of the pouch cell 10 together with the electrode assembly 100. In this instance, inside the pouch 200 of the pouch cell 10, the remaining moisture of the electrolyte solution or moisture coming in from the outside may react with a lithium salt to produce HF, and the decomposition of the electrolyte solution may produce gas such as carbon dioxide, carbon monoxide, ethylene and methane. Additionally, hydrogen and HF may be additionally produced according to the material of the positive electrode included in the electrode assembly 100 of the pouch cell 10, causing overheating due to overcharge and an internal short circuit during charging and discharging. As a consequence, a large amount of gas may be produced in the pouch 200. Due to the gas, the internal pressure of the pouch increases, and swelling or venting may occur in the pouch 200 by the increased pressure.

The pouch cell 10 according to embodiment 1 of the present disclosure may include a component for releasing gas inside the pouch 200 out of the pouch 200 to prevent venting.

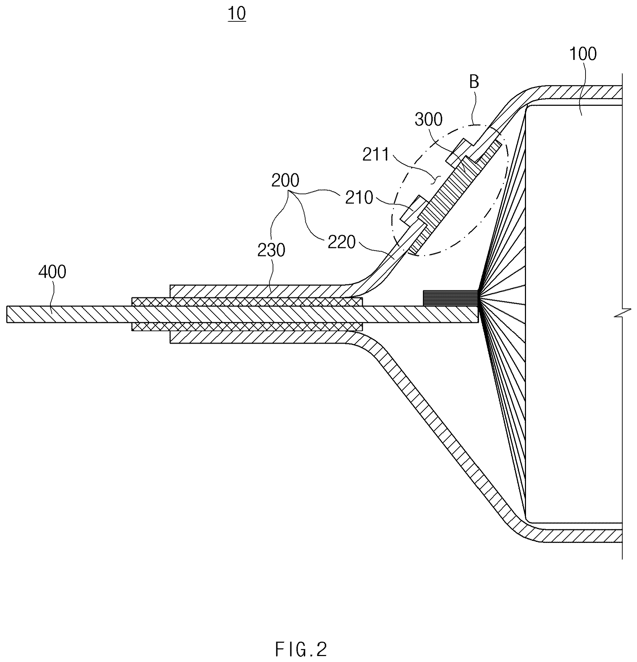

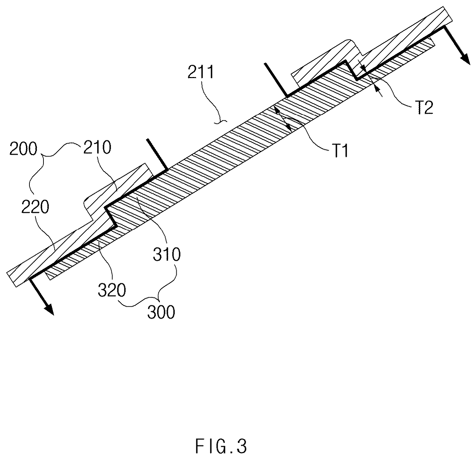

FIG. 2 is a schematic cross-sectional view of FIG. 1, taken along the line A-A', and FIG. 3 is a schematic enlarged view of section B in FIG. 2.

Referring to FIG. 2, the pouch 200 of the pouch cell 10 according to embodiment 1 of the present disclosure may have a hole 211 at a part of the pouch 200. Additionally, the pouch cell 10 may include the gas release film 300 at the part of the pouch 200 at which the hole 211 is formed.

The pouch 200 of the pouch cell 10 may include a gas release portion 210 and an outer packaging portion 220. The gas release portion 210 of the pouch 200 may be a portion at which the hole 211 is formed. The outer packaging portion 220 of the pouch 200 may be another portion that is connected to the gas release portion 210 and at which the hole 211 is not formed.

The gas release portion 210 may have the hole 211 of a circular shape in cross section. This is provided by way of an example, and the hole 211 may be formed in a different shape. Additionally, the present disclosure describes one hole 211 in the pouch 200 by way of an example, but the pouch 200 may have a plurality of holes 211.

Meanwhile, the gas release portion 210 according to embodiment 1 of the present disclosure may be disposed at a distance from the sealing portion 230. Specifically, the pouch 200 may include a cup portion formed in a concave shape for the placement of the electrode assembly 100. The cup portion may include a surface on which the electrode assembly 100 is placed and a surface bent from the surface to form an edge. Here, the gas release portion 210 may be formed in the surface that forms the edge. Accordingly, the gas release portion 210 may be disposed spaced apart from the electrode assembly 100, and may release gas inside the pouch 200 out of the pouch 200 through the hole 211 more efficiently. The hole 211 may be formed at different locations of the gas release portion 210 other than the location of the gas release portion 210 described in the present disclosure.

The gas release film 300 of the pouch cell 10 may be attached to the pouch 200 to cover the hole 211 of the pouch 200, and may allow gas to pass through. Specifically, gas produced in the pouch 200 may pass through the gas release film 300, and exit the pouch 200 through the hole 211.

The gas release film 300 may include a material that releases gas but does not allow a liquid to pass through. The gas release film 300 may have higher gas permeability than the pouch 200. For example, the gas release film 300 may include fluororesin. Specifically, the gas release film 300 may be made of polytetrafluoroethylene (PTFE).

The pouch cell 10 may enable efficient gas release through the permeability of the gas release film 300.

Because the gas release portion 210 of the pouch 200 has the hole 211 that leads from the inside of the pouch 200 to the outside, impurities such as moisture may go into the pouch 200 through the hole 211. When impurities such as moisture enter into the pouch 200, performance of the pouch cell 10 may degrade, and the pouch cell 10 may not properly perform the function. Accordingly, there is a need for a component for preventing moisture ingress into the pouch 200.

As an example of the component for preventing moisture ingress into the pouch 200, the pouch 200 of the pouch cell 10 according to embodiment 1 of the present disclosure may have a stepped shape of the gas release portion 210 and the outer packaging portion 220. Specifically, the gas release portion 210 may have the stepped shape in a direction facing away from the electrode assembly 100 disposed in the pouch 200. Accordingly, the gas release portion 210 may be disposed farther away from the electrode assembly 100 than the outer packaging portion 220.

The gas release film 300 of the pouch cell 10 may be disposed between the pouch 200 and the electrode assembly 100. That is, the gas release film 300 may be coupled to the inner surface of the pouch 200. Accordingly, a path between the pouch 200 and the gas release film 300 into which moisture may enter may be longer.

Meanwhile, because the gas release portion 210 and the outer packaging portion 220 have the stepped shape, the coupled area of the gas release film 300 to the pouch 200 may increase. Referring to FIG. 3, a connected part of the gas release portion 210 and the outer packaging portion 220 may be formed by the stepped shape, and this part may be additionally coupled to the gas release film 300. Here, the pouch 200 and the gas release film 300 may be coupled through sealing by heat and pressure. This is provided by way of an example, and the pouch 200 and the gas release film 300 may be coupled in a different manner. As the coupled area of the gas release film 300 to the pouch 200 increases, moisture ingress into the pouch 200 may become more difficult.

Referring to FIG. 3, the gas release film 300 may have a larger thickness T1 from the gas release portion 210 to a surface than a thickness T2 from the outer packaging portion 220 to the surface. In this instance, the surface of the gas release film 300 may refer to a surface facing the electrode assembly 100. Preferably, the gas release film 300 may have a shape that corresponds to the gas release portion 210 and the outer packaging portion 220 for coupling with all the inner surfaces of the pouch 200 facing the gas release film 300.

Because the gas release portion 210 and the outer packaging portion 220 of the pouch 200 have the stepped shape with each other, the path of moisture ingress from the outside of the pouch 200 to the inside of the pouch 200 may be longer than the non-stepped shape. That is, the sealed area of the pouch 200 and the gas release film 300 by sealing may increase. Accordingly, as the moisture ingress path increases, moisture ingress into the pouch 200 may become more difficult. For reference, in FIG. 3, the path of moisture ingress into the pouch 200 is indicated by the arrow.

The pouch cell 10 according to embodiment 1 of the present disclosure may prevent the ingress of impurities such as moisture into the pouch 200 through the hole 211 of the pouch 200. Accordingly, it may be possible to release gas inside the pouch 200 to the atmosphere and at the same time, to delay or prevent performance degradation of the pouch cell 10.

### Embodiment 2

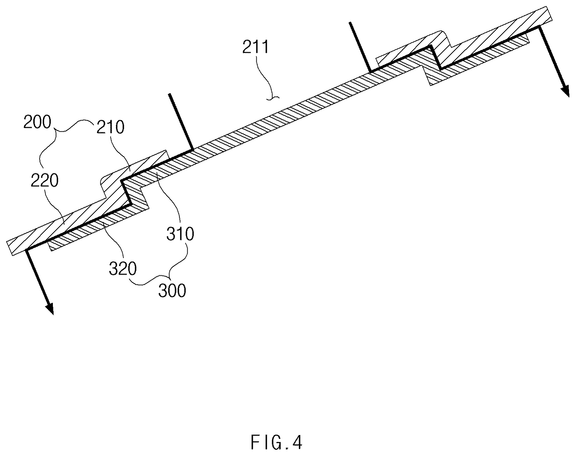

FIG. 4 is a schematic enlarged view of the gas release film 300 of the pouch cell 10 according to embodiment 2 of the present disclosure and its proximity.

Hereinafter, a detailed description of the same component as the component of the pouch cell 10 according to embodiment 1 of the present disclosure is omitted, and a difference will be described.

The pouch cell 10 according to embodiment 2 of the present disclosure may be different from the pouch cell 10 according to embodiment 1 of the present disclosure in the shape of the pouch 200 and the gas release film 300.

The pouch 200 of the pouch cell 10 according to embodiment 2 of the present disclosure may include the gas release portion 210 having the hole 211 and the outer packaging portion 220 having the stepped shape with the gas release portion 210. In this instance, the gas release portion 210 may have the stepped shape in a direction facing away from the electrode assembly 100 received in the pouch 200.

Referring to FIG. 4, the gas release film 300 of the pouch cell 10 may include a first film portion 310 and a second film portion 320. Specifically, the first film portion 310 may be attached to the gas release portion 210 of the pouch 200 to cover the hole 211. Additionally, the second film portion 320 may be attached to the outer packaging portion 220 of the pouch 200, and may have the stepped shape with the first film portion 310. More specifically, the first film portion 310 and the second film portion 320 of the gas release film 300 may have the stepped shape to conform to the stepped shape of the gas release portion 210 and the outer packaging portion 220 of the pouch 200.

Meanwhile, the first film portion 310 and the second film portion 320 of the gas release film 300 may have the same thickness. That is, a part of the gas release film 300 that covers the hole 211 may be formed with a smaller thickness than embodiment 1. Accordingly, it may be easy to allow gas inside the pouch 200 to pass through the gas release film 300, leading to more efficient gas release.

As an example of the component for efficiently preventing moisture ingress into the pouch 200, the pouch 200 of the pouch cell 10 according to embodiment 2 of the present disclosure may be surface-treated on one surface. Specifically, the pouch 200 may have higher surface roughness on a surface facing the gas release film 300 than surface roughness on a surface that does not face the gas release film 300. More specifically, the pouch 200 have the surface roughness R of 20 nm or more and 140 nm or less on the surface facing the gas release film 300. Here, the surface of the pouch 200 may refer to the inner surface facing the electrode assembly 100.

The surface of the pouch 200 facing the gas release film 300 may be the path of moisture ingress from the outside of the pouch 200 to the inside of the pouch 200. That is, because the surface roughness on the surface acting as the moisture ingress path is higher, hydrophobicity may be higher. Accordingly, it may be possible to prevent moisture ingress into the pouch 200 or reduce the amount of moisture ingress.

As an example of the surface treatment of the pouch 200 on the surface facing the gas release film 300, plasma treatment or primer treatment may be used. In this instance, the plasma treatment may refer to surface modification by placing an object in contact with plasma and applying energy to the surface. Additionally, the primer treatment may refer to treating an object with a primer.

Although the pouch cell 10 according to embodiment 2 of the present disclosure having high surface roughness of a part of the pouch 200 is described by way of an example, there may be other ways to increase hydrophobicity. For example, the surface of the pouch 200 facing the gas release film 300 may be coated with fluororesin. In this case, an additional component for enhancing adhesion between the pouch 200 and the film 300 may be necessary.

In FIG. 4, the path of moisture ingress into the pouch 200 is indicated by the arrow. Referring to FIG. 4, the path of moisture ingress into the pouch 200 may have higher surface roughness. Accordingly, because the hydrophobicity of the path of moisture ingress into the pouch 200 increases, it may be possible to prevent moisture ingress more efficiently.

### Embodiment 3

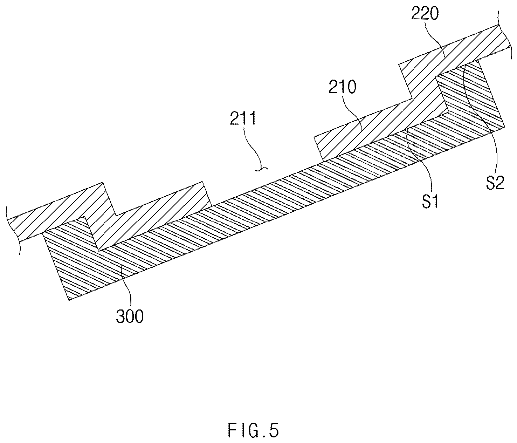

FIG. 5 is a schematic enlarged view of the gas release film 300 of the pouch cell 10 according to embodiment 3 of the present disclosure and its proximity.

The pouch cell 10 according to embodiment 3 of the present disclosure may be different embodiments 1 and 2 in the shape of the pouch 200 and the shape of the gas release film 300.

The pouch 200 of the pouch cell 10 according to embodiment 3 of the present disclosure may include the gas release portion 210 and the outer packaging portion 220. The gas release portion 210 may have the hole 211, and the outer packaging portion 220 may be connected to the gas release portion 210. Additionally, the gas release film 300 may be coupled to the pouch 200 to cover the hole 211 of the gas release portion 210. In this instance, the gas release film 300 may be disposed between the pouch 200 and the electrode assembly 100.

Referring to FIG. 5, the gas release portion 210 of the pouch 200 according to embodiment 3 of the present disclosure may have the stepped shape with the outer packaging portion 220. Specifically, the gas release portion 210 may have the stepped shape in a direction toward the electrode assembly 100. Accordingly, a distance between the gas release portion 210 and the electrode assembly 100 may be shorter than a distance between the outer packaging portion 220 and the electrode assembly 100.

The gas release film 300 may be coupled to a surface of the pouch 200. Specifically, the gas release film 300 may be coupled to a surface S1 of the gas release portion 210 and a surface S2 of the outer packaging portion 220. Accordingly, the coupled part of the gas release film 300 to the gas release portion 210 may be thinner than the coupled part of the gas release film 300 to the outer packaging portion 220.

In FIG. 5, the path of moisture ingress into the pouch 200 is indicated by the arrow. Referring to FIG. 5, the gas release film 300 may have a bent portion by the step between the gas release portion 210 and the outer packaging portion 220. When moisture enters into the pouch 200, moisture ingress may become comparatively difficult by the bent portion of the gas release film 300. Accordingly, the pouch cell 10 according to embodiment 3 of the present disclosure may efficiently prevent moisture ingress into the pouch 200 through the hole 211.

While the present disclosure has been hereinabove described with regard to a limited number of embodiments and drawings, the present disclosure is not limited thereto and it is obvious to persons having ordinary skill in the technical field pertaining to the present disclosure that various modifications and changes may be made thereto within the technical aspect of the present disclosure and the scope of the appended claims and their equivalents.

## Claims

1. A pouch cell comprising:
an electrode assembly including a positive electrode, a negative electrode and a separator;
a pouch accommodating the electrode assembly, and having a hole; and
a gas release film attached to the pouch to cover the hole, and configured to allow gas to pass through,
wherein the pouch includes:
a gas release portion having the hole; and
an outer packaging portion connected to the gas release portion, and
wherein the gas release portion and the outer packaging portion have a stepped shape with each other.

2. The pouch cell according to claim 1,
wherein the gas release portion has the stepped shape in a direction facing away from the electrode assembly.

3. The pouch cell according to claim 1,
wherein the gas release film is disposed between the pouch and the electrode assembly.

4. The pouch cell according to claim 1,
wherein the gas release film includes:
a first film portion attached to the gas release portion to cover the hole; and
a second film portion attached to the outer packaging portion, and having a stepped shape with the first film portion.

5. The pouch cell according to claim 4,
wherein the gas release film includes the first film portion and the second film portion having a same thickness.

6. The pouch cell according to claim 4,
wherein the gas release film has a larger thickness from the gas release portion to a surface than a thickness from the outer packaging portion to the surface.

7. The pouch cell according to claim 1,
wherein the gas release portion has the stepped shape in a direction toward the electrode assembly.

8. The pouch cell according to claim 7,
wherein the gas release film is coupled to a surface of the gas release portion and a surface of a part of the outer packaging portion.

9. The pouch cell according to claim 1,
wherein the pouch has a higher surface roughness on a surface facing the gas release film than a surface roughness on a surface that does not face the gas release film.

10. The pouch cell according to claim 1,
wherein the pouch is treated with a plasma or a primer to make a surface roughness on a surface facing the gas release film higher than a surface roughness on a surface that does not face the gas release film.

11. The pouch cell according to claim 1,
wherein the pouch has a surface roughness (R) of 20 nm or more and 140 nm or less on a surface facing the gas release film.

12. The pouch cell according to claim 1,
wherein the pouch further includes a sealing portion sealed by sealing, and
wherein the gas release portion is disposed at a distance from the sealing portion.
